(19) Europäisches Patentamt
European Patent Office
Office européen des brevets

(11) **EP 2 839 954 B1**

(12) **EUROPEAN PATENT SPECIFICATION**

(45) Date of publication and mention
of the grant of the patent:
**29.04.2020 Bulletin 2020/18**

(51) Int Cl.:
*B32B 15/09* (2006.01)  *B65D 8/16* (2006.01)
*B65D 65/40* (2006.01)  *B32B 27/36* (2006.01)
*B32B 1/02* (2006.01)  *B32B 7/02* (2019.01)
*B32B 15/18* (2006.01)  *B65D 1/16* (2006.01)

(21) Application number: **13778875.8**

(22) Date of filing: **01.04.2013**

(86) International application number:
**PCT/JP2013/059963**

(87) International publication number:
**WO 2013/157379 (24.10.2013 Gazette 2013/43)**

(54) **LAMINATED METAL SHEET, AND CANNING CONTAINER FOR FOOD**

LAMINIERTES METALLBLECH UND DOSENBEHÄLTER FÜR LEBENSMITTEL

FEUILLE MÉTALLIQUE STRATIFIÉE, ET BOÎTE DE CONSERVE POUR NOURRITURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.04.2012 JP 2012095663**

(43) Date of publication of application:
**25.02.2015 Bulletin 2015/09**

(73) Proprietor: **JFE Steel Corporation
Tokyo 100-0011 (JP)**

(72) Inventors:
• **NAKAGAWA, Yusuke
Tokyo 100-0011 (JP)**
• **KITAGAWA, Junichi
Tokyo 100-0011 (JP)**

• **YAMANAKA, Yoichiro
Tokyo 100-0011 (JP)**
• **TOBIYAMA, Yoichi
Tokyo 100-0011 (JP)**

(74) Representative: **Hoffmann Eitle
Patent- und Rechtsanwälte PartmbB
Arabellastraße 30
81925 München (DE)**

(56) References cited:
**EP-A1- 2 241 437     JP-A- H06 155 660
JP-A- 2005 161 621     JP-A- 2005 238 718
JP-A- 2005 305 701     JP-A- 2010 105 263
JP-A- 2010 158 821**

**Description**

Field

The present invention relates to a laminated metal sheet suitable for application to a material for a metal container high in degree of processing, such as a drawn can or a drawn and ironed can.

Background

Metal cans, which are of one form of packaging containers for foods, are excellent in mechanical strength and long-term preservability, are able to be filled with high-temperature contents to be hermetically sealed as-is, and are able to be easily subjected to sterilization by a retort treatment or the like after being hermetically sealed, and thus are high in safety and hygiene as packaging containers. Furthermore, metal cans have an advantage of being easily separated and collected from waste. Conventionally, metal cans were made of painted metal sheets. However, painting processes performed by can manufacturers are complicated and low in productivity. Furthermore, when solvent paints are used, in performing drying and baking processes after the painting, large amounts of solvents are volatilized, causing environmental problems such as solvent discharge. In addition, in order to avoid adverse effects of these solvents on human bodies, actions to regulate bisphenol A (BPA) that is one kind of endocrine disrupters contained in paints are increasing.
Due to such a background, in recent years, a laminated metal sheet, on which a BPA-free thermoplastic resin film is formed by thermal fusion bonding, has started to be used as a metal can material. Particularly, a laminated metal sheet, on which a polyester resin film is formed by thermal fusion bonding, is excellent in food hygiene performance, and hence, has been widely used. To be more specific, Patent Literature 1 and 2 describe a technique that uses, as a metal can material, a metal sheet having a biaxially oriented polyethylene terephthalate resin film laminated thereon via an adhesive layer of a low melting polyester resin. Furthermore, Patent Literature 3 and 4 describe a technique for manufacturing a laminated metal sheet and a metal can having a high drawing ratio by using a polyester resin film capable of being formed by thermal fusion bonding.

Citation List

Patent Literature

Patent Literature 1: Japanese Patent Application Laid-open No. 56-10451
Patent Literature 2: Japanese Patent Application Laid-open No. 1-192546
Patent Literature 3: Japanese Patent Application Laid-open No. 5-156040
Patent literature 4: Japanese Patent Application Laid-open No. 7-195617
Patent Literature 5: Japanese Patent Application Laid-open No. 5-331302
Patent Literature 6: Japanese Patent Application Laid-open No. 2002-88233
Patent Literature 7: Japanese Patent Application Laid-open No. 2001-335682
Patent Literature 8: Japanese Patent Application Laid-open No. 2004-58402
Patent Literature 9: Japanese Patent Application Laid-open No. 2004-249705

Additional prior art documents JP 2005 305701 A and EP 2 241 437 A1 disclose polyester laminated metal cans for foodstuff.

Summary

Technical Problem

When a laminated metal sheet having a polyester resin film formed by thermal fusion bonding thereon is applied to an outer surface side of a can container for food, that is, a side that comes in contact with high-temperature steam in a retort treatment, upon having been subjected to a high-temperature sterilization treatment such as the retort treatment, a retort whitening phenomenon, by which the polyester resin film is discolored, occurs, thus impairing design characteristics. Accordingly, when the laminated metal sheet having the polyester resin film formed by thermal fusion bonding thereon is applied to the outer surface side of the can container for food, for the laminated metal sheet, a retort whitening resistance is required. In addition, when the laminated metal sheet having the polyester resin film formed by thermal fusion bonding thereon is applied to an inner surface side of the can container for food, for the laminated metal sheet, a corrosion resistance is required. Furthermore, when the laminated metal sheet is applied to a can container for food that is high in degree of processing, such as a drawn can or a drawn and ironed can, in order to allow forming that is high in degree of processing, for the laminated metal sheet, an excellent mechanical property such as a drawing and ironing formability is required.

However, according to investigations by the inventors of the present invention, a laminated metal sheet having a retort whitening resistance as well as a corrosion resistance and, at the same time, having a mechanical property allowing forming that is high in degree of processing has not been provided. Accordingly, provision of the laminated metal sheet having the retort whitening resistance as well as the corrosion resistance and, at the same time, having the mechanical property allowing forming that is high in degree of processing has been hoped for.

Patent Literature 5 mentions that an increase in crystallization speed of a polymer can suppress the retort whitening phenomenon, but a mechanism of the retort whitening phenomenon has not been completely comprehended, and the problem of the retort whitening phenomenon has not been fundamentally solved. Furthermore, Patent Literature 6 to 9 describe a film for coating a metal sheet, which is used for drawing and ironing processing, characterized in that an aluminum sheet is laminated with a film composed of butylene terephthalate and ethylene terephthalate. However, such a flat and smooth laminated metal sheet is, when used for a container such as a can container for food, insufficient in formability, and possibly a defect such as breakage of the film is caused. Particularly, when a steel sheet higher in strength than an aluminum sheet is a substrate, the film is damaged upon forming and the use as a can body becomes impossible.

The present invention has been made in view of the above problems, and it is an object of the present invention to provide a laminated metal sheet having a retort whitening resistance as well as a corrosion resistance and, at the same time, having a mechanical property allowing forming that is high in degree of processing and a can container for food manufactured using the laminated metal sheet.

Solution to Problem

In order to solve the above problems and achieve the object, a laminated metal sheet according to the present invention includes: a metal sheet; a first polyester resin layer formed on a surface of the metal sheet to become an outer surface side of a container after the container is formed; and a second polyester resin layer formed on a surface of the metal sheet to become an inner surface side of the container after the container is formed, wherein the first polyester resin layer contains: 30% by mass to 60% by mass of copolymerized polyethylene terephthalate having a copolymerization component content of less than 6 mol%; and 40% by mass to 70% by mass of polybutylene terephthalate, the second polyester resin layer is copolymerized polyethylene terephthalate having a copolymerization component content of less than 14 mol%, residual orientations of the first and second polyester resin layers are less than 20%, determined by the method according to paragraphs [0030]-[0032] below, and where a sheet thickness reduction rate of a can wall in forming the metal sheet into a can body is A%, a film thickness of the first polyester resin layer before the forming is X $\mu$m, and a film thickness of the second polyester resin layer before the forming is Y $\mu$m, the film thicknesses X and Y of the first and the second polyester resin layers before the forming respectively satisfy the following expression (1) and expression (2).

$$X \times (1 - A/100) > 7 \qquad\qquad (1)$$

$$Y \times (1 - A/100) > 10 \qquad\qquad (2)$$

In order to solve the above problems and achieve the object, a can container for food according to the present invention is manufactured using the laminated metal sheet according to the present invention.

Advantageous Effects of Invention

According to the present invention, it is possible to provide a laminated metal sheet having a retort whitening resistance as well as a corrosion resistance and, at the same time, having a mechanical property allowing forming that is high in degree of processing and a can container for food manufactured using the laminated metal sheet for a container.

Description of Embodiments

Hereinafter, a laminated metal sheet that is one embodiment of the present invention is explained.

(General constitution of laminated metal sheet)

The laminated metal sheet that is one embodiment of the present invention includes a metal sheet, an outer-surface-side polyester resin layer formed on a surface of the metal sheet that becomes an outer surface side of a container after forming the container, and an inner-surface-side polyester resin layer formed on a surface of the metal sheet that becomes an inner surface side of the container after forming the container.

Constitution of metal sheet

As a metal sheet, a steel sheet or an aluminum sheet that is popularly used as a can container for food material can be used. Particularly, tin-free steel (TFS) that is a surface treated steel sheet having a two-layer film in which a lower layer and an upper layer are formed of a chromium metal and a chromium hydroxide, respectively, is preferable, for example. The coating weights of the chromium metal and the chromium hydroxide in the TFS are not limited particularly; however, in terms of formability or a corrosion resistance, it is desirable that the coating weight of the chromium metal is within the range from 70 to 200 $mg/m^2$, and the coating weight of the chromium hydroxide is within the range from 10 to 30 $mg/m^2$.

Retort whitening phenomenon

When a retort treatment is applied to a can container for food manufactured by using a metal sheet having a general polyester resin film coated thereon, in many cases, a phenomenon that the polyester resin film is whitened is observed. This is because micro voids formed in the polyester resin film diffusely reflects light from outside. The voids are not formed when performing a heat treatment under the dry condition or performing a retort treatment in a state of empty can that is not filled with contents. Furthermore, when an interface between the polyester resin film whitened and the metal sheet is observed, it is found that the voids are not formed entirely in the thickness direction of the polyester resin film but mainly formed in the vicinity of the surface of the metal sheet. This result may be brought about by the following mechanism, by which the voids are formed.

That is, the can container for food filled with contents is exposed to water vapor being high in temperature and pressure immediately after starting the retort treatment. In this case, some of the water vapor permeates the polyester resin film to penetrate to the vicinity of the surface of the metal sheet. The can container for food filled with contents is cooled by the contents with which the container is filled before the retort treatment and hence, the polyester resin film in the vicinity of the surface of the metal sheet is lower in temperature than a surrounding atmosphere. Accordingly, the water vapor is cooled in the amorphous polyester resin film in the vicinity of the surface of the metal sheet to be condensed into water, and the condensed water expands the polyester resin film, thus forming water bubbles. The water bubbles are, along with the course of the retort treatment, evaporated by the rise in the temperature of the contents, thus forming voids at places where the water bubbles are evaporated.

The polyester resin film in the vicinity of the metal sheet is cooled by the contents and formed by thermal fusion bonding and hence, the polyester resin film becomes an amorphous layer in which crystalline orientations are disordered. Accordingly, the mechanical strength of the polyester resin film in the vicinity of the metal sheet is lower than that of a crystalline layer to be easily deformed and hence, it is considered that the above-mentioned phenomenon occurs. Therefore, an increase in strength of the amorphous layer in the vicinity of the metal sheet can suppress the retort whitening phenomenon. However, in a thermal fusion bonding method, the metal sheet is heated to a temperature equal to or higher than a glass transition point and the polyester resin film is fusion bonded to the surface of the metal sheet to manufacture a laminated metal sheet and hence, it is impossible to avoid the fusion of a resin layer in the vicinity of the surface of the metal sheet and the disorder of the oriented crystal. Accordingly, in the present invention, the amorphous layer that is low in mechanical strength and fragile immediately after being laminated is changed to a hard and rigid layer after becoming a can body as a can container for food, thus suppressing the retort whitening phenomenon.

As a method for crystallizing the polyester resin film that is the amorphous layer before the retort treatment, there exists a method such that a heat treatment is applied to the polyester resin film before the retort treatment. To consider a case where the heat treatment is applied before forming a container, a polyester resin film being high in crystalline orientation is low in formability and hence, the shape of the container applicable is limited. Therefore, this case is not practical. Furthermore, also when the heat treatment is applied after forming the container, there is a disadvantage that the number of processes after the forming is increased, thus increasing manufacturing costs. Accordingly, inventors of the present invention have found a resin composition that is high in thermal crystallization rate for enhancing a crystal orientation by utilizing heat generated when in the retort treatment and applied the resin composition to the outer-surface-side polyester resin layer. That is, in the present invention, the polyester resin that is an amorphous layer is crystallized before the voids are formed in the resin layer on the outer surface of a can by the retort treatment to improve the strength of the amorphous layer.

Outer-surface-side polyester resin layer

As a specific composition for increasing the thermal crystallization rate of a first polyester resin layer formed on a surface of a metal sheet that becomes the outer surface side of a container after forming the container, a polyester composition composed of copolymerized polyethylene terephthalate in which the content of a copolymerization component is less than 6 mol% (hereinafter, referred to as polyester (A) in some cases) mixed with polybutylene terephthalate (hereinafter, referred to as polyester (B) in some cases) is effective, wherein the ratio of the polyester (A) is 60% by mass or less and the ratio of the polyester (B) is 40% by mass or more. When the ratio of the polyester (A) is more than 60% by mass and the ratio of the polyester (B) is less than 40% by mass, it is impossible to suppress the formation of air bubbles in the vicinity of the surface of the metal sheet when in the retort treatment, and the resin layer is whitened, thus greatly impairing design characteristics.

When the ratio of the polyester (A) is less than 30% by mass and the ratio of the polyester (B) is more than 70% by mass, the retort whitening phenomenon can be suppressed; however, the modulus of elasticity of the resin layer is excessively lowered to deteriorate the mechanical properties and hence, when conveying or forming, flaws are easily made on the resin layer and suitability to the can container for food is reduced. Furthermore, in terms of the cost of resin, this polyester composition is too expensive and not suitable for practical use. Accordingly, in the resin layer to become the outer surface after forming the container, in order to ensure the drawing formability, drawing and ironing formability, and flaw resistance while suppressing the retort whitening phenomenon, it is necessary that the ratio in % by mass (A/B) between the polyester (A) and the polyester (B) is within the range of 30 to 60/70 to 40, and more preferably, of 40 to 50/50 to 40.

The polyester (A) is obtained by performing a melt copolymerization reaction of a telephthalic acid component and an ethylene glycol component that are used as main components. In order not to impair the advantageous effects of the present invention, other components in the range of less than 6 mol% are copolymerized with polyethylene terephthalate, and the copolymerization component may be an acid component or an alcoholic component. As the copolymerization component, an aromatic dicarboxylic acid such as isophthalic acid, phthalic acid, and naphthalene dicarboxylic acid, an aliphatic dicarboxylic acid such as adipic acid, azelaic acid, sebacic acid, and decane dicarboxylic acid, and an alicyclic dicarboxylic acid such as cyclohexane dicarboxylic acid can be exemplified. In these substances, isophthalic acid is particularly preferable.

As a copolymerization alcoholic component, an aliphatic diol such as butanediol and hexanediol, and an alicyclic diol such as cyclohexane dimethanol can be exemplified. These components can be separately used or two or more kinds of components can be used together. The ratio of the copolymerization component is, depending on the kind thereof, such that, as a result, the melting point of a polymer is in the range from 210 to 256°C, preferably in the range from 215 to 256°C, and more preferably in the range from 220 to 256°C. When the melting point of a polymer is lower than 210°C, a heat resistance deteriorates, and when the melting point of a polymer exceeds 256°C, the crystallinity of a polymer is excessively large to impair formability.

The polyester (B) is obtained by performing a melt copolymerization reaction of a telephthalic acid component and a 1,4-butanediol component that are used as main components. In order not to impair the advantageous effects of the present invention, other components in the range of less than 14 mol% may be copolymerized, and the copolymerization component may be an acid component or an alcoholic component. As a copolymerization acid component, an aromatic dicarboxylic acid such as isophthalic acid, phthalic acid, or naphthalene dicarboxylic acid, an aliphatic dicarboxylic acid such as adipic acid, azelaic acid, sebacic acid, or decane dicarboxylic acid, or an alicyclic dicarboxylic acid such as cyclohexane dicarboxylic acid can be exemplified. In these substances, isophthalic acid, 2,6-naphthalene dicarboxylic acid, or adipic acid is preferable.

As a copolymerization alcoholic component, an aliphatic diol such as ethylene glycol or hexanediol, or an alicyclic diol such as cyclohexane dimethanol can be exemplified. These components can be separately used or two or more kinds of components can be used together. The ratio of the copolymerization component is such that, depending on the kind thereof, as a result, the melting point of a polymer is in the range from 180 to 223°C, preferably in the range from 200 to 223°C, and more preferably in the range from 210 to 223°C. When the melting point of a polymer is less than 180°C, polyester is low in crystallinity and as a result, a heat resistance lowers. The mixture ratio of the polyester (A) and the polyester (B) is adjusted so that the melting point of a polymer is in the range from 200 to 256°C, preferably in the range from 210 to 256°C, and more preferably in the range from 220 to 256°C.

A second polyester resin layer is characterized in that the second polyester resin layer is composed of copolymerized polyethylene terephthalate in which the content of a copolymerization component is less than 14 mol%, the residual orientation of each of the first and second polyester resin layer is less than 20%, and when the sheet thickness reduction rate of a can wall in forming a metal sheet into a can body is expressed as A%, the film thickness of the first polyester resin layer before the forming is expressed as X μm, and the film thickness of the second polyester resin layer before the forming is expressed as Y μm, and the film thicknesses X and Y of the first and second polyester resin layers before the forming satisfy expression (3) and expression (4), which are described later, respectively.

Inner-surface-side polyester resin layer

The second polyester resin layer formed on a surface of a metal sheet that becomes the inner surface side of a container after forming the container forms therein polyester (C) composed of polyethylene terephthalate as a main component. The polyester (C) is obtained by performing a melt copolymerization reaction of a dicarboxylic acid component composed of terephthalic acid as a main component and a glycol component composed of ethylene glycol as a main component. As the dicarboxylic acid component whose main component is terephthalic acid, isophthalic acid, naphthalene dicarboxylic acid, diphenyl dicarboxylic acid, or the like can be used. In these substances, it is preferable to use isophthalic acid in combination. Furthermore, as the glycol component whose main component is ethylene glycol, propanediol, butanediol, or the like may be used in combination.

Although polyethylene terephthalate as a main component may be copolymerized, the content of the copolymerization component is less than 14 mol%. The preferable ratio is such that, depending on the kind of the copolymerization component, as a result, the melting point of a polymer is in the range from 210 to 256°C, preferably in the range from 215 to 256°C, and more preferably in the range from 220 to 256°C. When the melting point of a polymer is lower than 210°C, a heat resistance deteriorates, and when the melting point of a polymer exceeds 256°C, the crystallinity of a polymer is excessively large to impair the formability. Furthermore, as required, an oxidation inhibitor, a heat stabilizer, an ultraviolet absorber, a plasticizer, a pigment, an antistatic agent, a crystal nucleating agent, or the like can be blended.

The above-mentioned inner-surface-side polyester resin layer is excellent in mechanical property such as tensile strength, modulus of elasticity, or impact strength and, at the same time, has polarity, and therefore, its adhesiveness and formability are able to be improved to a level capable of enduring forming of a container and, at the same time, shock resistance after forming the container is able to be imparted thereto.

Residual orientation

The key feature of a polyethylene terephthalate-based laminate film is that the amount of oriented crystals largely influences the characteristics thereof. Making use of this feature, the amount of oriented crystals is controlled to an appropriate amount depending on required performance, thus selectively manufacturing a laminated metal sheet having desired basic performance. As a specific method, by using a biaxially oriented crystal film, laminating conditions in a thermal fusion bonding method are precisely controlled, thus controlling the residual amount of oriented crystals.

This method is industrially extremely convenient, and it is possible to selectively manufacture various kinds of products corresponding to required performance using the same materials. Generally, the residual orientation is decreased to improve formability, and the residual orientation is increased, thus improving shock resistance. In the present invention, depending on degree of processing required for the application of a two-piece can, the residual orientation of a biaxially oriented polyester resin layer is controlled in the range of less than 20%. The residual orientation is a value obtained by an X-ray diffraction method and defined as follows.

(1) With respect to oriented polyester resin (or an oriented polyester film) before laminating and resin (or a film) after laminating, an X-ray diffraction intensity is measured under the condition that $2\theta$ ranges from 20 to 30°.
(2) A point indicating the X-ray diffraction intensity when $2\theta = 20°$ and another point indicating the X-ray diffraction intensity when $2\theta = 30°$ are connected with a straight line, which is defined as a base line.
(3) The height of the highest peak appeared in the vicinity of an area when $2\theta$ ranges from 22 to 28° is measured from the base line.
(4) When the height of the highest peak of a film before laminating is expressed as P1 and the height of the highest peak of a film after laminating is expressed as P2, a value obtained by calculating the expression P2/P1 $\times$ 100 represents the residual orientation (%).

The residual orientation of each of the outer-surface-side polyester resin layer and the inner-surface-side polyester resin layer is set to less than 20%. When the residual orientation is 20% or more, the formability of a film deteriorates, thus causing a can body breakage upon manufacturing a can or causing a defective condition such as peeling of the film after forming. When a biaxially oriented polyester film is formed by thermal fusion bonding, crystalline orientation is disordered by heat from a metal sheet, and the resin layer is changed into amorphous polyester resin. Here, low heat input when in thermal fusion bonding causes insufficient fusion of the resin layer on the interface with the metal sheet and low adhesion between the metal sheet and the resin layer. Accordingly, it is necessary to ensure the adhesion of the resin layer that is required when applying the layer to the can container for food, and lower the residual orientation to a certain level or lower and increase the ratio of the amorphous polyester resin layer excellent in formability that is laminated to the metal sheet to ensure formability. Therefore, the residual orientation of each of the outer-surface-side polyester resin layer and the inner-surface-side polyester resin layer is less than 20%, more preferably 15% or less, and more preferably 10% or less. In terms of film formability, it is desirable to lower the residual orientation as much as possible along with an increase in the degree of processing.

In order to balance the residual orientation depending on required characteristics in addition to the compositions of the outer-surface-side polyester resin layer and the inner-surface-side polyester resin layer, it is desirable that the outer-surface-side polyester resin layer applies thereto polyethylene terephthalate or copolymerized polyethylene terephthalate preferably copolymerized with isophthalic acid whose content is less than 6 mol% as an acid component as required and, at the same time, the inner-surface-side polyester resin layer applies thereto copolymerized polyethylene terephthalate preferably copolymerized with isophthalic acid whose content is less than 14 mol% as an acid component. The inner-surface-side polyester resin layer is applied to the inner surface side of a can after formed into a container, thus being copolymerized in order to ensure adhesion and flavor resistance.

The outer-surface-side polyester resin layer and the inner-surface-side polyester resin layer become the outer surface side and the inner surface side of a container after forming the container, respectively, and it is necessary to satisfy the above-mentioned required characteristics. The residual orientation is determined so as to exhibit the required characteristics. When the ratio of the amorphous polyester largely differs from an inner surface to an outer surface in being laminated, it is impossible to satisfy the required characteristics in one surface or both surfaces. In such a case, manufacture with the aimed residual orientation satisfying the required characteristics for both surfaces simultaneously becomes difficult. That is, it is necessary to adjust the compositions of the outer-surface-side polyester resin layer and the inner-surface-side polyester resin layer so as to prevent both polyester resin layers from being largely different in residual orientation from each other.

When a metal sheet is laminated with resin, the temperature of the metal sheet and the melting point of the resin are closely related to each other, and the temperature of the metal sheet in being laminated is determined depending on the melting point of the resin. The melting point of resin depends on the composition of the resin, polybutylene terephthalate is lower in melting point than polyethylene terephthalate, and the melting point is largely changed depending on a compounding ratio. Furthermore, isophthalic acid-copolymerized polyethylene terephthalate is lower in melting point than polyethylene terephthalate. Therefore, depending on a mixing ratio of the polyester (A) to the polyester (B), the melting point of resin in the outer-surface-side polyester resin layer is sufficiently lowered compared with the melting point of resin in the inner-surface-side polyester resin layer.

When the sheet thickness reduction rate of a can wall in forming a metal sheet into a can body is expressed as A%, the film thickness of the outer-surface-side polyester resin layer before the forming is expressed as X $\mu$m, and the film thickness of the inner-surface-side polyester resin layer before the forming is expressed as Y $\mu$m, the film thicknesses X and Y of the outer-surface-side polyester resin layer and the inner-surface-side polyester resin layer before the forming satisfy expression (3) and expression (4), which are indicted later, respectively. There exists the possibility that a laminated steel sheet applied to a drawn and ironed can impairs not only the formability thereof that is an ability of a film to follow a forming action but also the appearance thereof due to a metal face exposed after manufacturing the can, and causes corrosion beginning at the exposed metal portion thereof during a long-term storage and hence, it is important for the laminated steel sheet to be provided with a film coatability after manufacturing the can. The film is reduced in thickness at a reduction rate equivalent to the sheet thickness reduction rate of the laminated metal sheet. A coated metal sheet has an increased sheet surface roughness by ironing.

Accordingly, in order to maintain a good film coatability after manufacturing a can, it is necessary that a resin film thickness reduced is equal to or larger than the maximum value of the surface roughness of the steel sheet. Therefore, in order to ensure the film coatability after manufacturing a can, the film thicknesses X and Y of the outer-surface-side polyester resin layer and the inner-surface-side polyester resin layer before forming are set so as to satisfy expressions (3) and (4), which are indicated later, respectively. When the film thicknesses X and Y of the outer-surface-side polyester resin layer and the inner-surface-side polyester resin layer before the forming do not satisfy expressions (3) and (4), which are indicated later, respectively, an excessively reduced resin layer thickness causes incomplete coating on the surface of the steel sheet, thus causing corrosion of the steel sheet. The upper limit values of the film thicknesses X and Y before forming is not particularly limited except when each thickness unnecessarily increases in cost. It is supposed that the above-mentioned resin layer as a film is damaged depending on forming that is high in degree of processing. Accordingly, an organic lubricant or the like may be applied to the surface of the film or added to the film per se as needed in the range of the amount thereof such that the advantageous effects of the present invention is not impaired to improve a lubricating property, thus reducing damages to the film.

$$X \times (1 - A/100) > 7 \qquad\qquad (3)$$

$$Y \times (1 - A/100) > 10 \qquad\qquad (4)$$

The method for manufacturing the outer-surface-side polyester resin layer and the inner-surface-side polyester resin layer is not particularly limited, for example, each polyester resin material is dried as needed and thereafter, separately and/or each supplied to a known melt laminating extruder, and extruded in a sheet-like shape from a slit-shaped die. The extruded sheet is brought into close contact with a casting drum by a electrostatic application method or the like and cooled to solidify, thus obtaining a non-oriented sheet. Furthermore, the non-oriented sheet is stretched in the longitudinal direction and the lateral direction of a film, thus obtaining a biaxially oriented film. An orientation ratio can be set depending on orientation, strength, elastic modulus, or the like of the film that is intended. Here, it is preferable that the film is stretched by a tenter method in terms of the quality of the film, and it is desirable to use a successive biaxial orientation method in which the film is stretched in the longitudinal direction and thereafter, stretched in the lateral direction, or a simultaneous biaxial orientation method in which the film is stretched simultaneously in the longitudinal direction and in the lateral direction.

A method for manufacturing a laminated metal sheet is not particularly limited. For example, it is possible to use a method such that a metal sheet is heated at a temperature exceeding the melting point of a film, and resin films are brought into contact with and formed by thermal fusion bonding on both surfaces of the metal sheet with pressure rolls (hereinafter, referred to as lamination rolls). Laminating conditions are appropriately set so that a resin layer specified in the present invention can be obtained. For example, it is preferable that the temperature of the metal sheet in laminating is set to at least 160°C or higher and, as a history of the temperature applied to the film in laminating, the time in contact at a temperature equal to or higher than the melting point thereof is in the range from 1 to 20 msec.

In order to achieve such laminating conditions, it is necessary not only to laminate at high speed but also to cool while bonding. The application of pressure when laminating is not specified in particular; however, a contact pressure in the range from 0.098 to 2.94 MPa (from 1 to 30 kgf/cm$^2$) is preferable. To consider the case where the contact pressure is too low, even when a temperature that the interface of the resin reaches is the melting point or higher, the time is short and hence, it is impossible to obtain sufficient adhesion. Furthermore, even when the application of pressure is large, there is no disadvantage associated with the performance on the laminated metal sheet; however, a force applied to the lamination roll is large, and the structural strength of facilities is required to bring about uneconomical upsizing of devices.

In the present invention, the outer-surface-side polyester resin layer and the inner-surface-side polyester resin layer are, as a rule, formed into films and formed by thermal fusion bonding on a heated metal sheet; however, when the specifications of the outer-surface-side polyester resin layer and the inner-surface-side polyester resin layer are not departing from the gist of the present invention, it is also possible to apply melt-extrusion lamination, in which the outer-surface-side polyester resin layer and the inner-surface-side polyester resin layer are not formed into films and the outer-surface-side polyester resin layer and the inner-surface-side polyester resin layer are fused to coat the surface of the metal sheet therewith, to the outer-surface-side polyester resin layer and the inner-surface-side polyester resin layer.

Embodiments

In the embodiments, with respect to a cold-rolled annealed temper-rolled steel sheet having a thickness of 0.20 to 0.27 mm, chromium plating treatment was applied thereto after degreasing and pickling to manufacture a chromium-plated steel sheet (TFS). In the chromium plating treatment, the chromium plating treatment was applied to a steel sheet in a chromium plating bath containing $CrO_3$, $F^-$, and $SO4^{2-}$, intermediate rinsing is performed, and thereafter, electrolysis was performed in a chemical conversion treatment solution containing $CrO_3$ and $F^-$. In this case, electrolytic conditions (a current density, a quantity of electricity, and the like) were adjusted to obtain coating weights of chromium metal and chromium hydroxide of 120 mg/m$^2$ and 15 mg/m$^2$ in terms of Cr, respectively.

Next, using a device for coating a metal sheet, the chromium-plated steel sheets were heated and coated with resin films in inventive examples 1 to 12 and comparative examples 1 to 10, which are indicated in Table 1, by thermal fusion bonding with a lamination roll so that the outer-surface-side polyester resin layer (external resin layer) and the inner-surface-side polyester resin layer (internal resin layer) were formed on one surface and the other surface of each of the chromium-plated steel sheets, and thus, laminated metal sheets were manufactured. The lamination roll was of an internal water cooling-type and forcedly circulated cooling water therein while coating for performing the cooling thereof while bonding a film. Furthermore, the characteristics of the laminated metal sheets and the films on the laminated metal sheets were evaluated by the following method. Symbols of PET and PET/I in Table 1 indicate polyethylene terephthalate and isophthalic acid-copolymerized polyethylene terephthalate, respectively.

The drawing and ironing forming was performed such that paraffin wax having a melting point of 45°C was applied to both surfaces of the laminated metal sheet by 50 mg/m$^2$ and thereafter, a blank having a diameter of 123 mm was punched out, and the blank was formed by drawing it into a cup having an inner diameter of 71 mm and a height of 36 mm by using a commercial cupping press. Next, the cup was loaded into a DI forming machine to perform redrawing and three-stage ironing at a total reduction rate of 50% (the reduction rates in the respective stages were 20%, 19%, and 23%) under the condition of a punch speed of 200 mm/s and a stroke of 560 mm, and a can having an inner diameter of 52 mm and a height of 90 mm was finally formed. During DI forming, tap water was circulated at a temperature of 50°C. Inventive examples 1-5 and 8-20 on Tables 1 and 2 below do not belong to the present invention and represent reference examples.

Table 1

| | TFS sheet thickness (mm) | Sheet thickness reduction rate (%) | Laminating temperature (°C) | Outer-surface-side polyester resin layer | | | | | | | | | | Inner-surface-side polyester resin layer | | | | | |
|---|---|---|---|---|---|---|---|---|---|---|---|---|---|---|---|---|---|---|---|
| | | | | Melting point (°C) | Polyester (A) | | Polyester (B) | | Weight ratio between polyesters (A) and (B) | | Resin film thickness (µm) | X (1-A/100) | Residual orientation (%) | Melting point (°C) | Polyester(C) | | Resin film thickness (µm) | Y (1-A/100) | Residual orientation (%) |
| | | | | | Main Component | Copolymerization ratio (mol%) | Main component | Copolymerization ratio (mol%) | (A) | (B) | | | | | Main component | Copolymerization ratio (mol%) | | | |
| Inventive example 1 | 0.20 | 50 | 220 | 246 | PET | 0 | PBT | 0 | 47 | 53 | 18 | 9.0 | 18 | 226 | PET/I | 12 | 28 | 14.0 | 15 |
| Inventive example 2 | 0.20 | 50 | 230 | 246 | PET | 0 | PBT | 0 | 47 | 53 | 18 | 9.0 | 5 | 226 | PET/I | 12 | 28 | 14.0 | 0 |
| Inventive example 3 | 0.20 | 50 | 248 | 246 | PET | 0 | PBT | 0 | 47 | 53 | 18 | 9.0 | 0 | 226 | PET/I | 12 | 28 | 14.0 | 0 |
| Inventive example 4 | 0.20 | 50 | 240 | 245 | PET | 0 | PBT | 0 | 40 | 60 | 18 | 9.0 | 7 | 226 | PET/I | 12 | 28 | 14.0 | 0 |
| Inventive example 5 | 0.20 | 50 | 240 | 245 | PET | 0 | PBT | 0 | 40 | 60 | 18 | 9.0 | 7 | 226 | PET/I | 12 | 25 | 12.5 | 0 |
| Inventive example 6 | 0.20 | 50 | 220 | 235 | PET/I | 5 | PBT | 0 | 47 | 53 | 18 | 9.0 | 17 | 226 | PET/I | 12 | 28 | 14.0 | 14 |
| Inventive example 7 | 0.20 | 50 | 223 | 235 | PET/I | 5 | PBT | 0 | 47 | 53 | 18 | 9.0 | 10 | 226 | PET/I | 12 | 28 | 14.0 | 5 |
| Inventive example 8 | 0.20 | 50 | 235 | 248 | PET | 0 | PBT | 0 | 60 | 40 | 16 | 8.0 | 15 | 240 | PET/I | 5 | 25 | 12.5 | 7 |
| Inventive example 9 | 0.20 | 50 | 240 | 243 | PET | 0 | PBT | 0 | 30 | 70 | 16 | 8.0 | 5 | 224 | PET/I | 13 | 25 | 12.5 | 0 |
| Inventive example 10 | 0.20 | 50 | 248 | 247 | PET | 0 | PBT | 0 | 45 | 55 | 16 | 8.0 | 0 | 226 | PET/I | 12 | 25 | 12.5 | 0 |
| Inventive example 11 | 0.20 | 50 | 235 | 248 | PET | 0 | PBT | 0 | 60 | 40 | 18 | 9.0 | 15 | 226 | PET/I | 12 | 28 | 14.0 | 0 |
| Inventive example 12 | 0.20 | 50 | 235 | 245 | PET | 0 | PBT | 0 | 40 | 60 | 18 | 9.0 | 9 | 226 | PET/I | 12 | 28 | 14.0 | 0 |
| Inventive example 13 | 0.20 | 50 | 240 | 243 | PET | 0 | PBT | 0 | 30 | 70 | 16 | 8.0 | 5 | 240 | PET/I | 5 | 22 | 11.0 | 2 |
| Inventive example 14 | 0.20 | 50 | 240 | 243 | PET | 0 | PBT | 0 | 30 | 70 | 20 | 10.0 | 7 | 240 | PET/I | 5 | 30 | 15.0 | 4 |
| Inventive example 15 | 0.20 | 50 | 235 | 243 | PET | 0 | PBT | 0 | 30 | 70 | 16 | 8.0 | 8 | 240 | PET/I | 5 | 22 | 11.0 | 6 |
| Inventive example 16 | 0.20 | 50 | 240 | 248 | PET | 0 | PBT | 0 | 60 | 40 | 16 | 8.0 | 8 | 240 | PET/I | 5 | 28 | 14.0 | 3 |
| Inventive example 17 | 0.20 | 50 | 240 | 248 | PET | 0 | PBT | 0 | 60 | 40 | 20 | 10.0 | 9 | 240 | PET/I | 5 | 28 | 14.0 | 3 |
| Inventive example 18 | 0.20 | 50 | 240 | 243 | PET | 0 | PBT | 0 | 30 | 70 | 16 | 8.0 | 0 | 231 | PET/I | 9 | 22 | 11.0 | 0 |
| Inventive example 19 | 0.20 | 50 | 230 | 243 | PET | 0 | PBT | 0 | 30 | 70 | 16 | 8.0 | 15 | 231 | PET/I | 9 | 22 | 11.0 | 3 |
| Inventive example 20 | 0.20 | 50 | 230 | 243 | PET | 0 | PBT | 0 | 30 | 70 | 16 | 8.0 | 15 | 231 | PET/I | 9 | 25 | 12.5 | 3 |
| Inventive example 21 | 0.23 | 50 | 223 | 237 | PET/I | 5 | PBT | 0 | 50 | 50 | 18 | 7.2 | 11 | 226 | PET/I | 12 | 28 | 11.2 | 3 |
| Inventive example 22 | 0.23 | 50 | 225 | 237 | PET/I | 5 | PBT | 0 | 50 | 50 | 18 | 7.2 | 8 | 226 | PET/I | 12 | 28 | 11.2 | 2 |
| Inventive example 23 | 0.23 | 50 | 225 | 237 | PET/I | 5 | PBT | 0 | 50 | 50 | 25 | 10.0 | 9 | 226 | PET/I | 12 | 28 | 11.2 | 2 |
| Comparative example 1 | 0.20 | 50 | 210 | 235 | PET/I | 5 | PBT | 0 | 47 | 53 | 18 | 9.0 | 21 | 226 | PET/I | 12 | 28 | 14.0 | 28 |
| Comparative example 2 | 0.20 | 50 | 220 | 246 | PET | 0 | PBT | 0 | 47 | 53 | 12 | 6.0 | 18 | 226 | PET/I | 12 | 16 | 8.0 | 10 |
| Comparative example 3 | 0.20 | 50 | 248 | 246 | PET | 0 | PBT | 0 | 47 | 53 | 16 | 8.0 | 0 | 226 | PET/I | 12 | 19 | 9.5 | 0 |
| Comparative example 4 | 0.20 | 50 | 246 | 245 | PET | 0 | PBT | 0 | 40 | 60 | 12 | 6.0 | 0 | 256 | PET | 0 | 12 | 6.0 | 65 |
| Comparative example 5 | 0.20 | 50 | 248 | 247 | PET | 0 | PBT | 0 | 50 | 50 | 12 | 6.0 | 0 | 222 | PET/I | 15 | 16 | 8.0 | 0 |
| Comparative example 6 | 0.20 | 50 | 220 | 226 | PET/I | 12 | PBT | 0 | 100 | 0 | 19 | 9.5 | 8 | 226 | PET/I | 12 | 28 | 14.0 | 8 |
| Comparative example 7 | 0.20 | 50 | 215 | 235 | PET/I | 5 | PBT | 0 | 47 | 53 | 18 | 9.0 | 20 | 226 | PET/I | 12 | 28 | 14.0 | 23 |
| Comparative example 8 | 0.20 | 50 | 240 | 243 | PET | 0 | PBT | 0 | 28 | 72 | 16 | 8.0 | 5 | 222 | PET/I | 15 | 22 | 11.0 | 0 |

| | | | | | | | | | | | | | | | | | | |
|---|---|---|---|---|---|---|---|---|---|---|---|---|---|---|---|---|---|---|
| Comparative example 9 | 0.20 | 50 | 240 | 243 | PET | 0 | PBT | 0 | 28 | 72 | 16 | 8.0 | 5 | 222 | PET/I | 15 | 22 | 11.0 | 0 |
| Comparative example 10 | 0.20 | 50 | 240 | 249 | PET | 0 | PBT | 0 | 62 | 38 | 16 | 8.0 | 9 | 222 | PET/I | 15 | 22 | 11.0 | 0 |
| Comparative example 11 | 0.20 | 50 | 240 | 249 | PET | 0 | PBT | 0 | 62 | 38 | 16 | 8.0 | 9 | 222 | PET/I | 15 | 22 | 11.0 | 0 |
| Comparative example 12 | 0.20 | 50 | 235 | 238 | PET/I | 8 | PBT | 0 | 50 | 50 | 18 | 9.0 | 5 | 226 | PET/I | 12 | 28 | 14.0 | 0 |

Drawing and ironing formability

One in which a body breakage was caused after drawing and ironing forming was evaluated as "Poor" and one which was able to be manufactured into a can was evaluated as "Good", based on presence or absence of the body breakage after the forming. Furthermore, only samples that were able to be manufactured into cans were evaluated for the following items (2) to (4).

(2) Outer-surface coatability (Coatability of film on outer surface of can after forming)

Evaluation was performed based on coatability of a film on an outer surface of a can after forming (one having few film defects are good). To be more specific, with respect to a drawn and ironed can after rinsing and drying, a can opening was scratched using a file so that the steel sheet of the drawn and ironed can was energized and thereafter, the drawn and ironed can was put in a container (the container is a little larger than the drawn and ironed can) filled with electrolytic solution (1% solution of NaCl at a temperature of 25°C) in a posture with the bottom of the can faced downwardly so that only the outer surface of the can was brought into contact with the electrolytic solution. Thereafter, the outer-surface coatability was evaluated based on a current value measured when a voltage of 6 volts is applied between the can body and the electrolytic solution in accordance with the following criteria.
Poor: More than 5 mA
Fair: More than 0.5 mA, 5 mA or less
Good: More than 0.05 mA, 0.5 mA or less
Excellent: 0.05 mA or less

(3) Corrosion resistance (Coatability of film on inner surface of can after forming)

As for coatability of a film on an inner surface of a can (one having few film defects is good, with respect to a drawn and ironed can after being rinsed and dried, a can opening was scratched using a file so that the steel sheet of a drawn and ironed can was energized and thereafter, the drawn and ironed can was filled with electrolytic solution (1% solution of NaCl at a temperature of 25°C) and a voltage of 6 volts is applied between the can body and the electrolytic solution. Furthermore, the corrosion resistance was evaluated based on an electric current value in accordance with the following criteria.
Poor: More than 1 mA
Fair: More than 0.1 mA, 1 mA or less
Good: More than 0.01 mA, 0.1 mA or less
Excellent: 0.01 mA or less

(4) Retort whitening resistance

A resin-coated metal sheet was formed into a can by drawing and ironing forming, and the can was filled with water as contents and seamed. Thereafter, the can was put into a retort sterilization furnace in a posture with the bottom of the can faced downwardly, and the retort treatment was performed for 90 minutes at a temperature of 125°C. After the retort treatment, the change in appearance of the bottom portion of the can was visually observed in accordance with the following criteria.
Good: No change in appearance
Fair: Subtle opacity occurred in appearance
Poor: Whitish in appearance (occurrence of whitening)
Evaluation results are indicated in the following Table 2. As indicated in Table 2, laminated metal sheets in inventive examples 6-7 and 21-23 have all of the drawing and ironing formability, the outer-surface coatability, the corrosion resistance, and the retort whitening resistance. By contrast, laminated metal sheets in comparative examples 1 to 6 are inferior in any of the drawing and ironing formability, the outer-surface coatability, the corrosion resistance, and the retort whitening resistance. As has been described heretofore, according to the laminated metal sheets in inventive examples 6-7 and 21-23, it was confirmed that a laminated metal sheet having the retort whitening resistance, the corrosion resistance, and mechanical characteristics capable of performing the forming high in degree of processing such as the drawing or the drawing and ironing can be provided.

Table 2

| | Drawing and ironing formability | Outer-surface coatability | Corrosion resistance | Retort whitening resistance |
|---|---|---|---|---|
| Inventive example 1 | Good | Fair | Fair | Good |
| Inventive example 2 | Good | Excellent | Excellent | Good |
| Inventive example 3 | Good | Excellent | Excellent | Good |
| Inventive example 4 | Good | Good | Excellent | Good |
| Inventive example 5 | Good | Good | Good | Good |
| Inventive example 6 | Good | Fair | Good | Good |
| Inventive example 7 | Good | Good | Excellent | Good |
| Inventive example 8 | Good | Fair | Good | Good |
| Inventive example 9 | Good | Excellent | Excellent | Good |
| Inventive example 10 | Good | Excellent | Excellent | Good |
| Inventive example 11 | Good | Good | Excellent | Good |
| Inventive example 12 | Good | Excellent | Excellent | Good |
| Inventive example 13 | Good | Good | Good | Good |
| Inventive example 14 | Good | Good | Excellent | Good |
| Inventive example 15 | Good | Good | Good | Good |
| Inventive example 16 | Good | Good | Excellent | Good |
| Inventive example 17 | Good | Good | Excellent | Good |
| Inventive example 18 | Good | Good | Good | Good |
| Inventive example 19 | Good | Good | Good | Good |
| Inventive example 20 | Good | Good | Excellent | Good |
| Inventive example 21 | Good | Good | Excellent | Good |
| Inventive example 22 | Good | Excellent | Excellent | Good |
| Inventive example 23 | Good | Excellent | Excellent | Good |
| Comparative example 1 | Good | Poor | Fair | Good |
| Comparative example 2 | Good | Poor | Poor | Good |
| Comparative example 3 | Good | Good | Poor | Good |
| Comparative example 4 | Poor | Not evaluated | Not evaluated | Not evaluated |
| Comparative example 5 | Good | Poor | Poor | Good |
| Comparative example 6 | Good | Good | Good | Poor |
| Comparative example 7 | Good | Fair | Fair | Good |
| Comparative example 8 | Good | Good | Fair | Good |

(continued)

| | Drawing and ironing formability | Outer-surface coatability | Corrosion resistance | Retort whitening resistance |
|---|---|---|---|---|
| Comparative example 9 | Good | Good | Fair | Good |
| Comparative example 10 | Good | Fair | Fair | Fair |
| Comparative example 11 | Good | Fair | Fair | Fair |
| Comparative example 12 | Good | Fair | Good | Good |

Although the embodiments to which the present invention made by the inventors of the present invention is applied are explained, the present invention is not limited by the above examples.

Industrial Applicability

According to the present invention, it is possible to provide a laminated metal sheet having the retort whitening resistance, the corrosion resistance, and mechanical characteristics capable of performing the forming high in degree of processing and a can container for food manufactured by using the laminated metal sheet for the container.

**Claims**

1.   A laminated metal sheet, comprising:

a metal sheet;
a first polyester resin layer formed on a surface of the metal sheet to become an outer surface side of a container after the container is formed; and
a second polyester resin layer formed on a surface of the metal sheet to become an inner surface side of the container after the container is formed, wherein
the first polyester resin layer contains:

30% by mass to 60% by mass of copolymerized polyethylene terephthalate having a copolymerization component content of less than 6 mol%; and
40% by mass to 70% by mass of polybutylene terephthalate,

the second polyester resin layer is copolymerized polyethylene terephthalate having a copolymerization component content of less than 14 mol%,
residual orientations of the first and second polyester resin layers are less than 20%, determined in accordance with the X-ray diffraction method indicated in the section of the description with the heading "Residual orientation", and
where a sheet thickness reduction rate of a can wall in forming the metal sheet into a can body is A%, a film thickness of the first polyester resin layer before the forming is X $\mu$m, and a film thickness of the second polyester resin layer before the forming is Y $\mu$m, the film thicknesses X and Y of the first and the second polyester resin layers before the forming respectively satisfy the following expression (1) and expression (2):

$$X \times (1 - A/100) > 7 \qquad (1),$$

and

$$Y \times (1 - A/100) > 10 \qquad (2).$$

**2.** A can container for food manufactured using the laminated metal sheet according to claim 1.

**Patentansprüche**

**1.** Laminiertes Metallblech, umfassend:

ein Metallblech;
eine erste Polyesterharzschicht, die auf einer Oberfläche des Metallblechs ausgebildet ist, so dass sie eine äußere Oberflächenseite eines Behälters wird, nachdem der Behälter geformt ist; und
eine zweite Polyesterharzschicht, die auf einer Oberfläche des Metallblechs ausgebildet ist, so dass sie eine innere Oberflächenseite des Behälters wird, nachdem der Behälter geformt ist, worin
die erste Polyesterharzschicht enthält:

30 Massen-% bis 60 Massen-% copolymerisiertes Polyethylenterephthalat mit einem Gehalt an Copolymerisationsbestandteil von weniger als 6 mol%; und
40 Massen-% bis 70 Massen-% Polybutylenterephthalat,

die zweite Polyesterharzschicht copolymerisiertes Polyethylenterephthalat mit einem Gehalt an Copolymerisationsbestandteil von weniger als 14 mol% ist,
die Restorientierungen der ersten und zweiten Polyesterharzschichten weniger als 20% betragen, bestimmt gemäß der Röntgenbeugungsmethode, die im Abschnitt der Beschreibung mit der Überschrift "Restorientierung" beschrieben ist, und
wobei eine Blechdickenreduktionsrate einer Dosenwand bei der Formung des Metallblechs in einen Dosenkörper A% ist, eine Filmdicke der ersten Polyesterharzschicht vor der Formung X $\mu$m beträgt und eine Filmdicke der zweiten Polyesterharzschicht vor der Formung Y $\mu$m beträgt, wobei die Filmdicken X und Y der ersten und der zweiten Polyesterharzschichten vor dem Formen jeweils den folgenden Ausdruck (1) bzw. Ausdruck (2) erfüllen:

$$X \times (1 - A/100) > 7 \qquad\qquad (1)$$

und

$$Y \times (1 - A/100) > 10 \qquad\qquad (2).$$

**2.** Dosenbehälter für Lebensmittel, der unter Verwendung des laminierten Metallblechs gemäß Anspruch 1 hergestellt ist.

**Revendications**

**1.** Feuille métallique stratifiée comprenant :

une feuille métallique ;
une première couche de résine de polyester formée sur une surface de la feuille métallique pour devenir un côté de surface extérieure d'une boîte après la formation de la boîte ; et
une seconde couche de résine de polyester formée sur une surface de la feuille métallique pour devenir un côté de surface intérieure de la boîte après la formation de la boîte, dans laquelle
la première couche de résine de polyester contient :

30 % en masse à 60 % en masse de téréphtalate de polyéthylène copolymérisé présentant une teneur en composant de copolymérisation inférieure à 6 % en moles ; et
40 % en masse à 70 % en masse de téréphtalate de polybutylène,

la seconde couche de résine de polyester est du téréphtalate de polyéthylène copolymérisé présentant une teneur en composant de copolymérisation inférieure à 14 % en moles,
des orientations résiduelles des première et seconde couches de résine de polyester sont inférieures à 20 %, déterminées selon le procédé de diffraction à rayons X indiqué dans la section de la description avec le titre « orientation résiduelle », et
dans laquelle un taux de réduction d'épaisseur de feuille d'une paroi de boîte lors de la formation de la feuille métallique dans un corps de boîte est A%, une épaisseur de film de la première couche de résine de polyester avant la formation est X $\mu$m, et une épaisseur de film de la seconde couche de résine de polyester avant la formation est Y $\mu$m, les épaisseurs de film X et Y des première et seconde couches de résine de polyester avant la formation satisfont respectivement à l'expression (1) et à l'expression (2) suivantes :

$$X \times (1 - A/100) > 7 \qquad (1),$$

et

$$Y \times (1 - A/100) > 10 \qquad (2).$$

2. Boîte de conserve pour des aliments fabriquée en utilisant la feuille métallique stratifiée selon la revendication 1.

**EP 2 839 954 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56010451 A
- JP 1192546 A
- JP 5156040 A
- JP 7195617 A
- JP 5331302 A
- JP 2002088233 A
- JP 2001335682 A
- JP 2004058402 A
- JP 2004249705 A
- JP 2005305701 A
- EP 2241437 A1